# EUROPÄISCHE PATENTANMELDUNG

(11) **EP 2 469 226 A2**
(43) Veröffentlichungstag der Anmeldung: **27.06.2012**
(21) Anmeldenummer: 11189464.8
(22) Anmeldetag: 17.11.2011
(51) Int. Cl.: G01C 15/00

(54) **Optisches System zur Strahlformung eines Laserstrahls sowie Lasersystem mit einem solchen optischen System**

(30) Priorität: 22.12.2010 DE 102010063938
(71) Anmelder: HILTI Aktiengesellschaft, 9494 Schaan (LI)
(72) Erfinder: Dang, Lieu-Kim, 9473 Gams (CH); Wuersch, Christoph, 9470 Werdenberg (CH)

(57) **Zusammenfassung**

Optisches System (2) zur Strahlformung eines Laserstrahls (6) bestehend aus einem ersten optischen Element (25), das eine Mantelfläche (15), die als Reflektionsfläche für den Laserstrahl (6) ausgebildet ist, umfasst, wobei die Mantelfläche (15) den Laserstrahl zumindest abschnittsweise in einen ringförmigen Laserstrahl (18) umformt und der zumindest abschnittsweise ringförmige Laserstrahl (18) sich in einer Ausbreitungsebene (19) ausbreitet, wobei ein weiteres optisches Element (26) zur Strahlformung des ringförmigen Laserstrahls (18) vorgesehen ist, das den ringförmigen Laserstrahl (18) zumindest abschnittsweise in einer Ebene parallel zur Ausbreitungsebene (19) des Laserstrahls formt.

## Beschreibung

Die vorliegende Erfindung betrifft ein optisches System zur Strahlformung eines Laserstrahls gemäß dem Oberbegriff des Anspruchs 1 sowie ein Lasersystem mit einem solchen optischen System.

Ein einfallender Laserstrahl wird an einer Grenzfläche grundsätzlich in drei Teile aufgeteilt: Ein erster Teil wird an der Grenzfläche reflektiert (reflektierter Laserstrahl), ein zweiter Teil tritt durch die Grenzfläche in das zweite optische Medium ein (transmittierter Laserstrahl) und ein dritter Teil wird an der Grenzfläche absorbiert (absorbierter Laserstrahl). Als Grenzfläche ist eine Fläche definiert, die zwischen zwei Medien mit unterschiedlichen Brechungsindices angeordnet ist. Als Transmissionsfläche wird eine Grenzfläche bezeichnet, an der ein Laserstrahl überwiegend von einem ersten in ein zweites optisches Medium übertritt. Als Reflektionsfläche wird eine Grenzfläche bezeichnet, an der ein Laserstrahl überwiegend innerhalb eines optischen Mediums umgelenkt wird. Die Anteile des reflektierten, transmittierten und absorbierten Laserstrahls können beispielsweise über die Wellenlänge und/oder den Einfallswinkel des einfallenden Laserstrahls und/oder eine Beschichtung der Grenzfläche verändert werden.

US 7,497,018 B2 offenbart ein Lasersystem, bei dem ein punktförmiger Laserstrahl mittels eines optischen Systems in einen zumindest abschnittsweise ringförmigen Laserstrahl umgeformt wird. Das Lasersystem umfasst ein Gehäuse und eine in dem Gehäuse angeordnete Strahleinrichtung bestehend aus einer Strahlquelle zur Erzeugung eines Laserstrahls und dem optischen System. Das optische System umfasst ein erstes optisches Element und ein als Kollimationslinse ausgebildetes zweites optisches Element, die in einem Optikträger angeordnet sind. Die Strahlquelle erzeugt einen divergenten primären Laserstrahl, der auf die Kollimationslinse trifft, die den primären Laserstrahl kollimiert und einen parallelen Laserstrahl erzeugt. Der kollimierte Laserstrahl trifft auf das erste optische Element, das in Ausbreitungsrichtung hinter der Kollimationslinse angeordnet und als Kegelspiegel ausgebildet ist. Bei einem Kegelspiegel handelt es sich um ein reflektierendes optisches Element, das zumindest abschnittsweise in Form eines Kegels mit einer Grundfläche und einer an die Grundfläche angrenzenden Mantelfläche ausgebildet ist. Die Mantelfläche des Kegelspiegels ist als Reflektionsfläche ausgebildet, an der der kollimierte Laserstrahl um 90° umgelenkt und in einen zumindest abschnittsweise ringförmigen Laserstrahl umgeformt wird.

Das bekannte optische System zur Strahlformung eines Laserstrahls erzeugt auf einer Zielfläche eine linienförmige Lasermarkierung. Nachteilig ist, dass das optische System nicht geeignet ist, in der Laserebene neben der linienförmigen Lasermarkierung punktförmige Lasermarkierungen, die beispielsweise zur Übertragung von rechten Winkeln geeignet sind, anzuzeigen.

Die Aufgabe der vorliegenden Erfindung besteht darin, ein optisches System sowie ein Lasersystem mit einem solchen optischen System zu entwickeln, bei dem neben der Anzeige einer linienförmigen Lasermarkierung Winkel von einer Zielfläche auf eine andere Zielfläche übertragen werden können.

Diese Aufgabe wird bei dem eingangs genannten optischen System zur Strahlformung eines Laserstrahls erfindungsgemäß durch die Merkmale des unabhängigen Anspruchs 1 gelöst. Vorteilhafte Weiterbildungen sind in den abhängigen Ansprüchen angegeben.

Erfindungsgemäß ist ein weiteres optisches Element zur Strahlformung des zumindest abschnittsweise ringförmigen Laserstrahls vorgesehen, wobei das weitere optische Element den ringförmigen Laserstrahl zumindest abschnittsweise in einer Ebene parallel zur Ausbreitungsebene formt. Diese Ausführung hat den Vorteil, dass neben einer linienförmigen Lasermarkierung, die der ringförmige Laserstrahl auf einer Zielfläche erzeugt, auf der Zielfläche punktförmige Lasermarkierungen erzeugt werden können. Werden zwei punktförmige Lasermarkierungen unter einem definierten Winkel zueinander angeordnet, kann der Winkel mit Hilfe der beiden punktförmigen Lasermarkierungen von einer Zielfläche auf eine andere Zielfläche übertragen werden.

In einer bevorzugten Ausführungsform ist das weitere optische Element zur Strahlformung des zumindest abschnittsweise ringförmigen Laserstrahls in die Mantelfläche des ersten optischen Elementes integriert ist oder grenzt unmittelbar an die Mantelfläche an. Diese Ausführung hat den Vorteil, dass die Justage der optischen Elemente zueinander bereits bei der Herstellung des optischen Systems erfolgt und nur ein optischer Träger erforderlich ist. Der Justageaufwand für den Bediener ist reduziert.

In einer weiteren bevorzugten Ausführungsform umfasst das erste optische Element einen ersten Mantelflächenabschnitt, der den zumindest abschnittsweise ringförmigen Laserstrahl erzeugt, und das weitere optische Element einen zweiten Mantelflächenabschnitt, wobei der zweite Mantelflächenabschnitt an den ersten Mantelflächenabschnitt angrenzt. Das erste optische Element wird aus mehreren Abschnitten, die aneinander grenzen, zusammengesetzt. Dabei werden die Abschnitte so gewählt, dass sie die gewünschten strahlformenden Eigenschaften aufweisen, ein erster Abschnitt erzeugt einen ringförmigen Laserstrahl und ein zweiter Abschnitt erzeugt einen punktförmigen Laserstrahl.

In einer weiteren bevorzugten Ausführungsform ist ein weiteres optisches Element mit mindestens einer Grenzfläche vorgesehen, wobei das optische Element zur Strahlformung des ringförmigen Laserstrahls in einer Ebene parallel zur Ausbreitungsebene in die mindestens eine Grenzfläche integriert ist oder unmittelbar an die mindestens eine Grenzfläche angrenzt. Dadurch, dass das optische Element zur Strahlformung des ringförmigen Laserstrahls in einer Ebene parallel zur Ausbreitungsebene in eine vorhandene Grenzfläche integriert wird, erfolgt die Justage der optischen Elemente bereits bei der Herstellung des optischen Systems, ein zusätzlicher optischer Träger kann entfallen.

Besonders bevorzugt ist ein weiteres optisches Element zur Strahlformung des zumindest abschnittsweise ringförmigen Laserstrahls in einer Ebene senkrecht zur Ausbreitungsebene vorgesehen, wobei das weitere optische Element in die mindestens eine Grenzfläche integriert ist oder unmittelbar an die mindestens eine Grenzfläche angrenzt. Diese Ausführung hat den Vorteil, dass auf der Zielfläche eine schmale linienförmige Lasermarkierung erzeugt werden kann. Der ringförmige Laserstrahl wird beispielsweise mit Hilfe einer Kollimationsoptik oder einer Fokussieroptik geformt. Dadurch, dass das weitere optische Element in eine vorhandene Grenzfläche integriert wird, erfolgt die Justage der optischen Elemente bereits bei der Herstellung des optischen Systems, ein zusätzlicher optischer Träger kann entfallen. Der Justageaufwand für den Bediener ist reduziert.

Das optische Element zur Strahlformung des ringförmigen Laserstrahls in einer Ebene parallel zur Ausbreitungsebene und/oder das weitere optische Element zur Strahlformung des ringförmigen Laserstrahls in einer Ebene senkrecht zur Ausbreitungsebene sind bevorzugt als diffraktive optische Elemente ausgebildet und in die Mantelfläche des ersten optischen Elementes und/oder in die mindestens eine Grenzfläche des weiteren optischen Elementes integriert. Diffraktive optische Elemente formen einen Laserstrahl so, dass die nullte Beugungsordnung des Laserstrahls auf der Zielfläche eine linienförmige Lasermarkierung erzeugt und die höheren Beugungsordnungen, vor allem die erste Beugungsordnung, punktförmige Lasermarkierungen erzeugen. Ein einfallender Laserstrahl lässt sich mit Hilfe eines diffraktiven optischen Elementes in nahezu jede beliebige Strahlverteilung formen.

Das optische Element zur Strahlformung des ringförmigen Laserstrahls in einer Ebene parallel zur Ausbreitungsebene und/oder das weitere optische Element zur Strahlformung des ringförmigen Laserstrahls in einer Ebene senkrecht zur Ausbreitungsebene sind bevorzugt als geschliffene optische Elemente ausgebildet. Punktförmige Laserstrahlen können mittels einer Strahlformungsoptik kollimiert oder fokussiert werden. Diese Strahlformungsoptik kann durch eine gekrümmte Eintrittsfläche in die geschliffenen optischen Elemente integriert werden.

In einer bevorzugten Ausführungsform ist das erste optische Element als Grundkörper mit einer Grundfläche, einer Deckfläche und einer an die Grund- und Deckflächen angrenzenden Mantelfläche ausgebildet, wobei die Grundfläche und die Mantelfläche zumindest abschnittsweise als Transmissionsflächen für den Laserstrahl ausgebildet sind und der Grundkörper einen ersten Ausschnitt mit einer Grundfläche, die in der Deckfläche des Grundkörpers angeordnet ist, und der Mantelfläche, die zumindest abschnittsweise als Reflektionsfläche für den Laserstrahl ausgebildet ist, umfasst. Diese Ausführung hat den Vorteil, dass nur ein optischer Träger erforderlich ist und die Justage der beiden optischen Elemente bei der Herstellung des optischen Systems erfolgt. Die Ausbildung des Grundkörpers mit zwei Transmissionsflächen bietet den Vorteil, dass weitere Funktionen in den Grundkörper integriert oder unmittelbar an den Grundkörper angrenzend ausgebildet werden können.

Besonders bevorzugt weist der Grundkörper einen zweiten Ausschnitt bestehend aus einer Grundfläche, die in der Grundfläche des Grundkörpers angeordnet ist, einer Deckfläche, die zumindest abschnittsweise als Transmissionsfläche für den Laserstrahl ausgebildet ist, und einer an die Grund- und Deckflächen angrenzenden Mantelfläche, die zumindest abschnittsweise als Reflektionsfläche für den Laserstrahl ausgebildet ist, auf. Das optische System weist somit eine erste und zweite Reflektionsfläche für den Laserstrahl auf, wobei die Mantelfläche des in der Deckfläche angeordneten ersten Ausschnittes die erste Reflektionsfläche und die Mantelfläche des in der Grundfläche angeordneten zweiten Ausschnittes die zweite Reflektionsfläche bilden. Durch die zweifache Reflektion des Laserstrahls ist das erfindungsgemäße optische System unempfindlich gegenüber einer Verkippung der Reflektionsfläche zum einfallenden Laserstrahl. Da die zweite Reflektionsfläche ebenfalls in den Grundkörper des optischen Elementes integriert ist, ist nur ein optischer Träger erforderlich und die Justage der ersten und zweiten Reflektionsfläche erfolgt bei der Herstellung des ersten und zweiten Ausschnittes im Grundkörper.

Besonders bevorzugt weist der erste Ausschnitt des Grundkörpers eine zur Grundfläche parallele Deckfläche, die zumindest abschnittsweise als Transmissionsfläche für den Laserstrahl ausgebildet ist, auf. Diese Ausführung hat den Vorteil, dass neben dem ringförmigen Laserstrahl ein punktförmiger Lotstrahl erzeugt wird. Über ein in die Deckfläche integriertes oder unmittelbar angrenzendes optisches Element kann die Strahlform des Lotstrahls angepasst werden. Mittels einer Kollimations- oder Fokussieroptik kann ein kollimierter oder fokussierter Lotstrahl erzeugt werden.

Außerdem wird ein Lasersystem mit einer Strahlquelle zur Erzeugung eines Laserstrahls und dem erfindungsgemäßen optischen System vorgeschlagen. Bevorzugt ist eine Verstelleinrichtung vorgesehen, mit der die Position der Strahlquelle zum optischen System und/oder die Position des optischen Systems zur Strahlquelle in einer Ausbreitungsrichtung des Laserstrahls und/oder in einer Ebene senkrecht zur Ausbreitungsrichtung des Laserstrahls verstellbar sind.

In einer bevorzugten Ausführung des Lasersystems sind ein erstes optisches System, das einen ersten zumindest abschnittsweise ringförmigen Laserstrahl und mindestens einen punktförmigen Laserstrahl erzeugt, und mindestens ein weiteres optisches System, das einen weiteren zumindest abschnittsweise ringförmigen Laserstrahl und mindestens einen punktförmigen Laserstrahl erzeugt, vorgesehen.

Besonders bevorzugt ist ein drittes optisches System, das einen dritten zumindest abschnittsweise ringförmigen Laserstrahl und mindestens einen punktförmigen Laserstrahl erzeugt, vorgesehen. Dabei sind die ringförmigen Laserstrahlen senkrecht zueinander oder unter einem definierten Winkel angeordnet.

In einer weiteren bevorzugten Ausführung des Lasersystems ist zumindest ein optisches System so ausgebildet, dass neben einem zumindest abschnittsweise ringförmigen Laserstrahl und mindestens einem punktförmigen Laserstrahl, die beide in der gleichen Ausbreitungsebene verlaufen, ein punktförmiger Lotstrahl erzeugt wird.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:

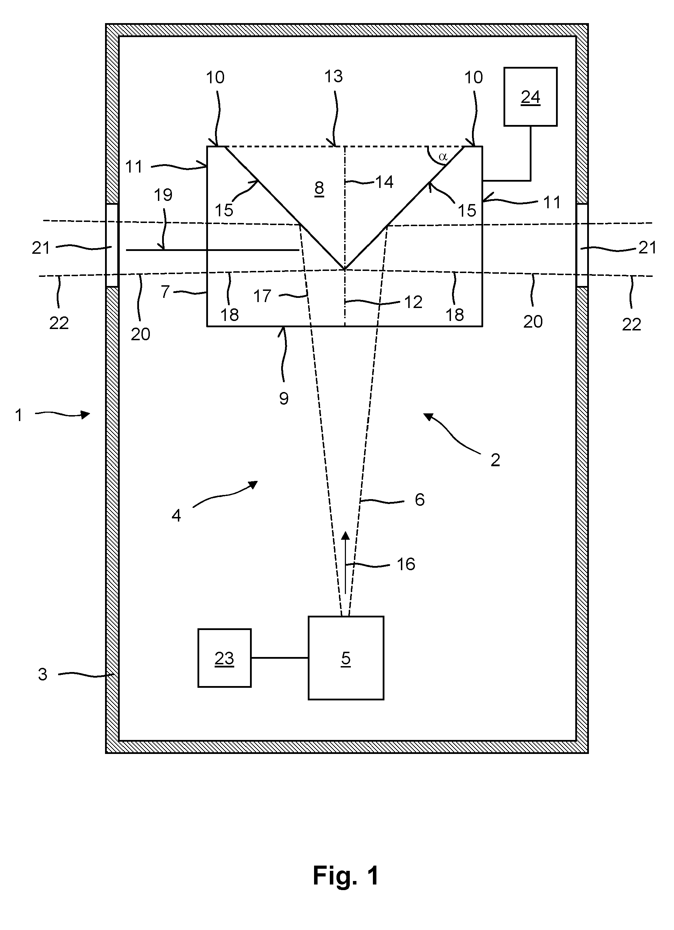

- Fig. 1: ein Lasersystem mit einer ersten Ausführungsform eines erfindungsgemäßen optischen Systems bestehend aus einem zylinderförmigen Grundkörper mit einem kegelförmigen Ausschnitt in der Deckfläche des Grundkörpers,

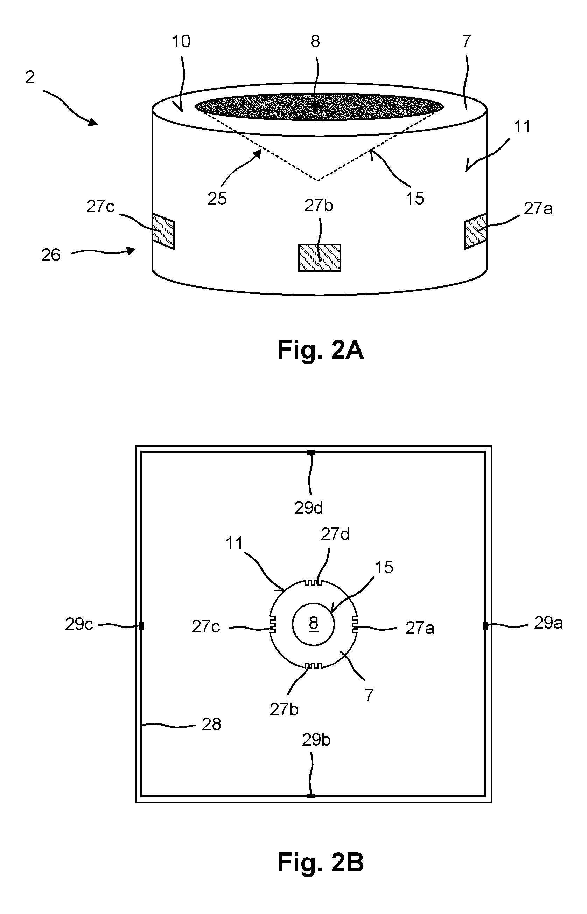

- Fign. 2A, B: das erfindungsgemäße optische System der Fig. 1 mit vier diffraktiven optischen Elementen, die in die Mantelfläche des Grundkörpers integriert sind, in einer dreidimensionalen Ansicht (Fig. 2A) und in einem Schnitt senkrecht zur Zylinderachse des Grundkörpers (Fig. 2B);

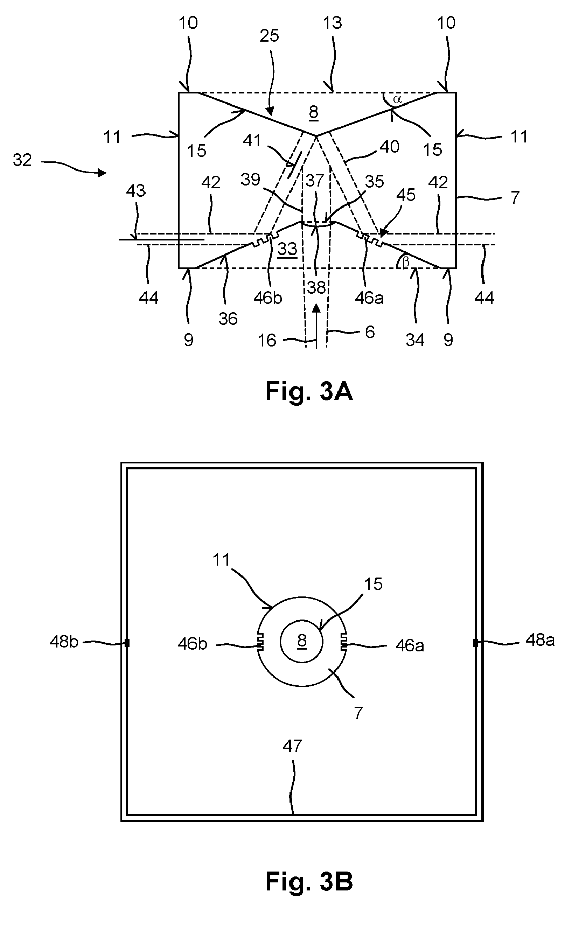

- Fign. 3A, B: eine zweite Ausführungsform eines erfindungsgemäßen optischen Systems bestehend aus einem zylinderförmigen Grundkörper mit einem ersten kegelförmigen Ausschnitt in der Deckfläche und einem zweiten kegelstumpfförmigen Ausschnitt in der Grundfläche des Grundkörpers, wobei zwei diffraktive optische Elemente in die Mantelfläche des zweiten Ausschnittes integriert sind, in einem Schnitt parallel (Fig. 3A) und einem Schnitt senkrecht zur Zylinderachse des Grundkörpers (Fig. 3B);

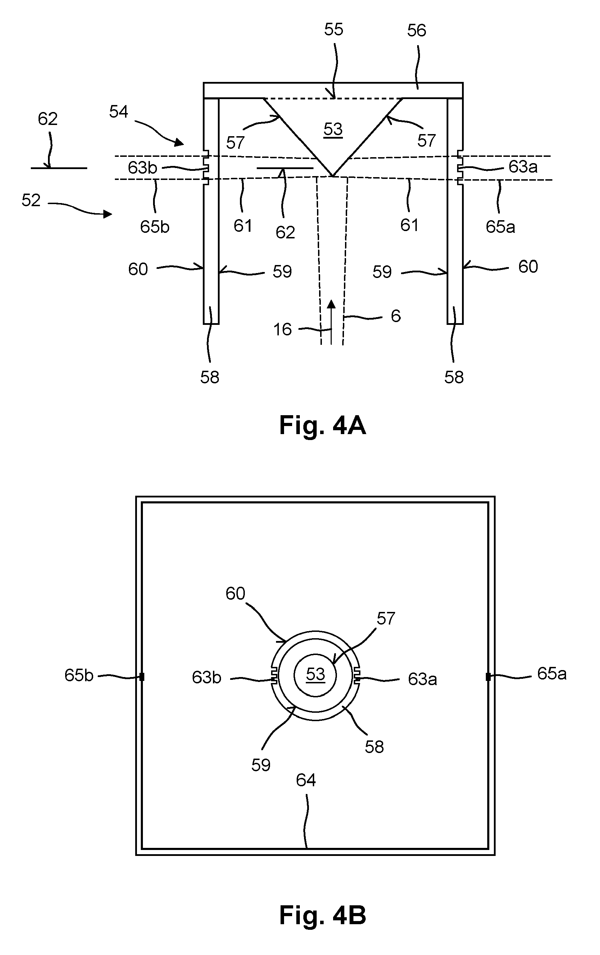

- Fign. 4A, B: eine dritte Ausführungsform eines erfindungsgemäßen optischen Systems bestehend aus einem Kegelspiegel und einem Trägerelement, wobei zwei diffraktive optische Elemente in das Trägerelement integriert sind, in einem Schnitt parallel (Fig. 4A) und einem Schnitt senkrecht zur Kegelachse des Kegelspiegels (Fig. 4B);

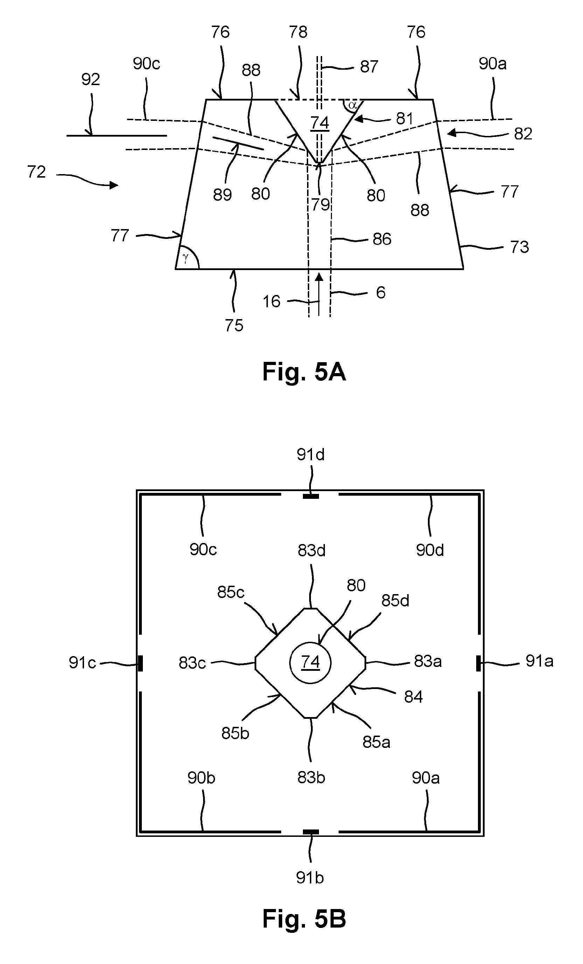

- Fign. 5A, B: eine vierte Ausführungsform eines erfindungsgemäßen optischen Systems bestehend aus einem pyramidenstumpfförmigen Grundkörper mit einer quadratischen Grundfläche und einem kegelstumpfförmigen Ausschnitt in der Deckfläche des Grundkörpers, wobei in die Mantelfläche des Grundkörpers vier plane optische Elemente integriert sind, in einem Schnitt parallel zur Pyramidenachse (Fig. 5A) und einem Schnitt senkrecht zur Pyramidenachse des Grundkörpers (Fig. 5B);

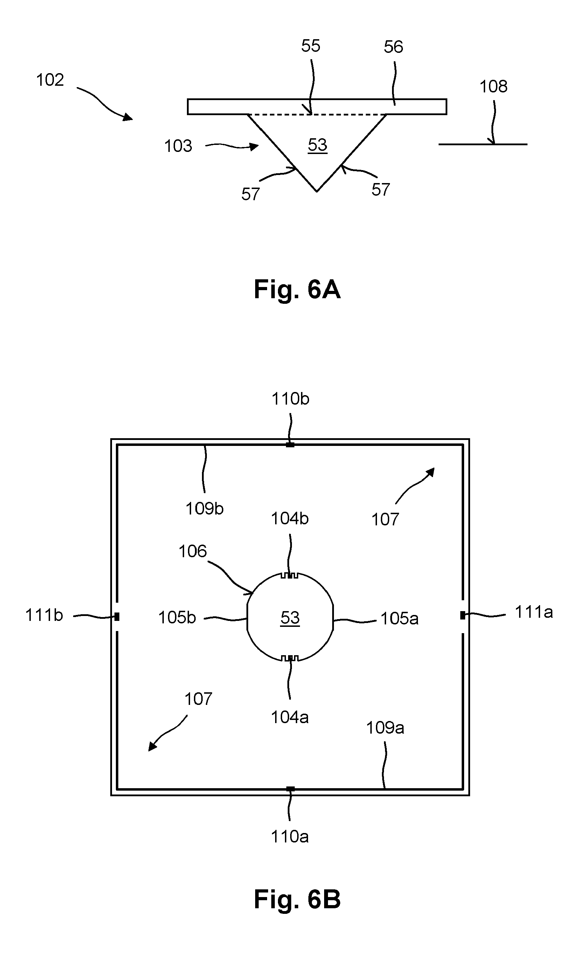

- Fign. 6A, B: eine fünfte Ausführungsform eines erfindungsgemäßen optischen Systems bestehend aus dem Kegelspiegel der Fign. 4A, B, wobei zwei diffraktive optische Elemente und zwei plan geschliffene optische Elemente in die Mantelfläche des Kegelspiegels integriert sind, in einem Schnitt parallel zur Kegelachse (Fig. 6A) und einem Schnitt senkrecht zur Kegelachse des Kegelspiegels (Fig. 6B); und

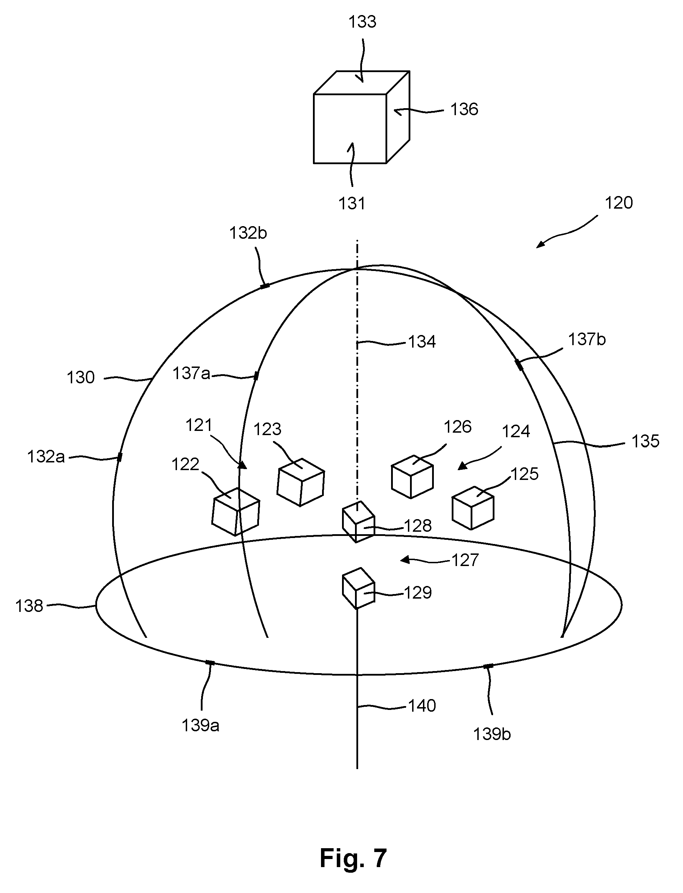

- Fig. 7: ein Lasersystem mit einem ersten, zweiten und dritten optischen System, die drei senkrecht zueinander angeordnete, linienförmige Laserstrahlen und einen punktförmigen Laserstrahl erzeugen.

**Fig. 1** zeigt ein Lasersystem **1** mit einer ersten Ausführungsform eines erfindungsgemäßen optischen Systems **2**. Das Lasersystem 1 umfasst ein Gehäuse **3** und eine in dem Gehäuse 3 angeordnete Strahleinrichtung **4** bestehend aus dem optischen System 2 und einer Strahlquelle **5**.

Die Strahlquelle 5 ist als Halbleiterlaser ausgebildet, der einen primären Laserstrahl 6 im sichtbaren Spektrum, beispielsweise einen roten Laserstrahl mit einer Wellenlänge von 635 nm oder einen grünen Laserstrahl mit einer Wellenlänge von 532 nm, erzeugt. Nach dem Austritt des primären Laserstrahls 6 aus der Strahlquelle 5 kommt es aufgrund der Divergenz zu einer Aufweitung des Laserstrahls 6, d.h. der Strahldurchmesser des primären Laserstrahls 6 nimmt mit der Entfernung des Laserstrahls 6 von der Strahlquelle 5 zu. Mit Hilfe einer Kollimationsoptik kann ein Laserstrahl kollimiert werden.

Im Strahlengang hinter der Strahlquelle 5 ist das erfindungsgemäße optische System 2 angeordnet. Das optische System 2 ist als Grundkörper **7** in Form eines geraden Kreiszylinders mit einem kegelförmigen Ausschnitt **8** ausgebildet. Ein Kreiszylinder ist ein Zylinder mit einer kreisförmigen Grundfläche. Ein Zylinder ist von zwei parallelen, ebenen Flächen, die als Grund- und Deckfläche bezeichnet werden, und einer Mantelfläche begrenzt. Ein Zylinder entsteht durch Verschiebung einer in einer Ebene liegenden, begrenzten Fläche entlang einer Geraden, die nicht in der Ebene liegt und die Zylinderachse definiert. Bei einem geraden Zylinder liegt die Zylinderachse senkrecht zur Grundfläche, wohingegen die Zylinderachse bei einem schiefen Zylinder unter einem Winkel ≠ 90° zur Grundfläche angeordnet ist. Der Abstand der beiden Ebenen, in denen die Grund- und Deckflächen liegen, definiert die Höhe des Zylinders.

Die Oberfläche des Kreiszylinders 7 umfasst eine kreisförmige Grundfläche **9,** eine zur Grundfläche 9 parallele kreisförmige Deckfläche **10** und eine die Grund- und Deckflächen 9, 10 verbindende Mantelfläche **11.** Die Grund- und Deckflächen 9, 10 sind senkrecht und die Mantelfläche 11 parallel zu einer Zylinderachse **12** angeordnet. Die Grundfläche 9 und die Mantelfläche 11 des Kreiszylinders 7 bilden zwischen dem optischen System 2 und der Umgebung jeweils eine Grenzfläche, die als Transmissionsflächen für den Laserstrahl 6 ausgebildet sind. Die Transmissionsflächen 9, 11 werden auch als Eintrittsfläche 9 und Austrittsfläche 11 für den Laserstrahl bezeichnet.

Der im Grundkörper 7 vorgesehene Ausschnitt 8 ist als gerader Kreiskegel ausgebildet. Ein Kreiskegel ist ein Kegel mit einer kreisförmigen Grundfläche. Im Allgemeinen ist ein Kegel ein geometrischer Körper, der entsteht, wenn alle Punkte einer in einer Ebene liegenden, begrenzten Fläche geradlinig mit einem Punkt, der außerhalb der Ebene liegt, verbunden werden. Die Fläche wird als Grundfläche, die Begrenzungslinie der Grundfläche als Leitkurve und der Punkt als Kegelspitze bezeichnet. Der Abstand der Kegelspitze von der Grundfläche definiert die Höhe des Kegels. Die Verbindungslinien der Kegelspitze mit der Leitkurve werden als Mantellinien und die Vereinigung der Mantellinien als Mantelfläche des Kegels bezeichnet. Bei einem geraden Kegel mit einer kreisförmigen Grundfläche liegt die Kegelspitze auf der Kegelachse, die senkrecht zur Grundfläche durch den Mittelpunkt der Grundfläche verläuft, wohingegen die Kegelachse bei einem schiefen Kreiskegel außerhalb des Mittelpunktes der Grundfläche verläuft.

Die Oberfläche des kegelförmigen Ausschnittes 8 umfasst eine kreisförmige Grundfläche **13,** die senkrecht zu einer Kegelachse **14** angeordnet ist, und eine an die Grundfläche 13 angrenzende Mantelfläche **15,** die unter einem Winkel α zur Grundfläche 13 angeordnet ist. Die Grundfläche 13 des kegelförmigen Ausschnittes 8 ist auf der Deckfläche 10 des Kreiszylinders 7 angeordnet und die Kegelachse 14 verläuft kollinear zur Zylinderachse 12.

Die Mantelfläche 15 des kegelförmigen Ausschnittes 8 bildet zwischen dem optischen System 2 und der Umgebung eine Grenzfläche, die als Reflektionsfläche für den Laserstrahl 6 ausgebildet ist. Der Reflektionsgrad einer Reflektionsfläche hängt unter anderem vom Einfallswinkel eines einfallenden Laserstrahls und den Brechungsindices n₁, n₂ der Materialien ab. Damit ein Laserstrahl möglichst vollständig an der Mantelfläche 15 reflektiert wird, sollte der Einfallswinkel die Bedingung der Totalreflektion, Einfallswinkel≥ arcsin (n₂/n₁), erfüllen. Der reflektierte Anteil kann alternativ oder zusätzlich dadurch erhöht werden, dass die Reflektionsfläche 15 mit einer hochreflektierenden Beschichtung versehen wird.

Der divergente primäre Laserstrahl 6 breitet sich in einer Ausbreitungsrichtung **16** aus und trifft auf die Eintrittsfläche 9, durch die der transmittierte Anteil als transmittierter Laserstrahl **17** hindurch tritt. Der transmittierte Laserstrahl 17 propagiert durch den Grundkörper 7 und trifft auf die Reflektionsfläche 15, die den reflektierten Anteil umlenkt und in einen zumindest abschnittsweise ringförmigen Laserstrahl **18** umformt. Der ringförmige Laserstrahl 18 breitet sich in einer Ausbreitungsebene **19** aus und trifft auf die Austrittsfläche 11, durch die der transmittierte Anteil als transmittierter Laserstrahl **20** hindurch tritt und sich weiterhin in der Ausbreitungsebene 19 ausbreitet. An der Austrittsfläche 11 erfolgt keine Ablenkung des Laserstrahls. In die Austrittsfläche 11 ist eine Strahlformungsoptik integriert, die den Laserstrahl 18 in der Ausbreitungsebene 19 formt.

Der Winkel α der Reflektionsfläche 15 ist so gewählt, dass der primäre Laserstrahl 6 durch das optische System 2 um 90° abgelenkt wird und die Ausbreitungsebene 19 des ringförmigen Laserstrahls 18, 20 senkrecht zur Ausbreitungsrichtung 16 des primären Laserstrahls 6 verläuft. Der Laserstrahl 20 wird über ein Auskoppelfenster **21** aus dem Gehäuse 3 ausgekoppelt und trifft als ausgekoppelter Laserstrahl **22** auf eine Wand, Decke oder ein sonstiges Zielobjekt und kann als Lasermarkierung verwendet werden.

Die Sichtbarkeit eines Laserstrahls auf einem Zielobjekt hängt unter anderem von der Intensität des Laserstrahls ab. Daher ist es sinnvoll, den Öffnungswinkel des Laserstrahls an die Messaufgabe anzupassen, um die verfügbare Intensität auszunutzen. Der Öffnungswinkel des ausgekoppelten Laserstrahls 22 kann über den Bereich, den der Laserstrahl 17 auf der Reflektionsfläche 15 ausleuchtet, eingestellt werden. Durch Verschiebung der optischen Achse des primären Laserstrahls 6 und/oder der Zylinderachse 12 des Kreiszylinders 7 ist der Öffnungswinkel des ausgekoppelten Laserstrahls 22 einstellbar. Dazu ist eine Verstelleinrichtung **23** vorgesehen, mit der die Position der Strahlquelle 5 in der Ausbreitungsrichtung 16 des primären Laserstrahls 6 und/oder in einer Ebene senkrecht zur Ausbreitungsrichtung 16 verstellbar ist. Alternativ oder zusätzlich ist eine weitere Verstelleinrichtung **24** vorgesehen, mit der das optische System 2 in der Ausbreitungsrichtung 16 und/oder in der Ebene senkrecht zur Ausbreitungsrichtung 16 verstellbar ist.

**Fign. 2A****, B** zeigen das optische System 2 der Fig. 1 in einer dreidimensionalen Ansicht (Fig. 2A) und in einem Schnitt senkrecht zur Zylinderachse 12 des Grundkörpers 7 (Fig. 2B).

Das optische System 2 umfasst ein als Reflektionsfläche 15 ausgebildetes erstes optisches Element **25,** das den ringförmigen Laserstrahl 18 erzeugt, und eine Strahlformungsoptik **26,** die den ringförmigen Laserstrahl 18 zumindest abschnittsweise in einer Ebene parallel zur Ausbreitungsebene 19 formt. Die Strahlformungsoptik 26 ist in die Mantelfläche 11 des Grundkörpers 7 integriert und in Form von vier mikrostrukturierten Oberflächen **27a-27d** ausgebildet. Dabei bedeutet der Begriff "integriert", dass zwischen dem Grundkörper 7 und der Strahlformungsoptik 26 keine Grenzfläche besteht.

Die mikrostrukturierten Oberflächen 27a-27d sind so ausgebildet, dass die nullte Beugungsordnung des Laserstrahls 18 auf einer Zielfläche eine linienförmige Lasermarkierung **28** erzeugt und die höheren Beugungsordnungen, vor allem die erste Beugungsordnung, punktförmige Lasermarkierungen **29a-29d** erzeugen. Mikrostrukturierte Oberflächen sind auch unter der Bezeichnung "diffraktive optische Elemente" bekannt. Sie wirken wie ein optisches Gitter und spalten einen einfallenden Laserstrahl winkelabhängig in verschiedene Beugungsordnungen. Diffraktive optische Elemente haben den Vorteil, dass sich Laserstrahlen in nahezu jede beliebige Strahlverteilung formen lassen. Die Herstellung von diffraktiven optischen Elementen erfolgt in photolithographischen Herstellungsverfahren sowie mittels scannender Strukturierungsverfahren wie Diamantdrehen, Laser- oder Elektronenstrahlschreiben .

**Fign. 3A****, B** zeigen eine zweite Ausführungsform eines erfindungsgemäßen optischen Systems **32,** das als Grundkörper in Form des geraden Kreiszylinders 7 mit dem ersten kegelförmigen Ausschnitt 8 und einem zweiten kegelstumpfförmigen Ausschnitt **33** ausgebildet ist. Dabei zeigt Fig. 3A einen Schnitt durch das optische System 32 parallel zur Zylinderachse 12 und Fig. 3B einen Schnitt senkrecht zur Zylinderachse 12 des Grundkörpers 7.

Der Kreiszylinder 7 umfasst die kreisförmige Grundfläche 9, die zur Grundfläche 9 parallele, kreisförmige Deckfläche 10 und die Mantelfläche 11, die für den Laserstrahl als Transmissionsfläche in Form einer Austrittsfläche ausgebildet ist. Die Oberfläche des ersten kegelförmigen Ausschnittes 8 umfasst die kreisförmige Grundfläche 13, die in der Deckfläche 10 des Grundkörpers 7 angeordnet ist, und die an die Grundfläche 13 angrenzende Mantelfläche 15, die als erste Reflektionsfläche für den Laserstrahl ausgebildet ist. Die Oberfläche des zweiten kegelstumpfförmigen Ausschnittes 33 umfasst eine kreisförmige Grundfläche **34,** die in der Grundfläche 9 des Grundkörpers 7 angeordnet ist, eine zur Grundfläche 34 parallele, kreisförmige Deckfläche **35,** die für den Laserstrahl als Transmissionsfläche ausgebildet ist, und eine Mantelfläche **36,** die unter einem Winkel β zur Grundfläche 34 angeordnet und als zweite Reflektionsfläche für den Laserstrahl ausgebildet ist.

Das optische System 32 weist ein als Kollimationsoptik ausgebildetes weiteres optisches Element **37** auf, das unmittelbar an die Deckfläche 35 des zweiten kegelstumpfförmigen Ausschnittes 33 angrenzt. Dabei bedeutet der Begriff " unmittelbar angrenzend", dass der Grundkörper 7 und die Kollimationsoptik 37 eine gemeinsame Grenzfläche aufweisen und zwischen den optischen Flächen der beiden optischen Elemente 7, 37 kein sonstiges optisches Element oder Medium mit einem unterschiedlichen Brechungsindex, wie beispielsweise Luft, angeordnet ist. Die Kollimationsoptik 37 ist als asphärisch gekrümmte Linse ausgebildet und die der Deckfläche 35 abgewandte Oberfläche der Kollimationsoptik 37 bildet eine Transmissionsfläche für den Laserstrahl 6 in Form einer gekrümmten Eintrittsfläche **38.** Alternativ kann die Kollimationsoptik 37 in den Grundkörper 7 integriert und monolithisch aus einem Material hergestellt werden. Als Materialien für den Grundkörper 7 eignen sich beispielsweise Glas und Kunststoffe. Die asphärische Krümmung wird bei Glas beispielsweise durch Diamantdrehen, Replika, Schleifen und Polieren oder durch Pressen bei hohen Temperaturen aus einem Glaspressling und bei Kunststoff durch Spritzgiessen oder Spritzprägen erzeugt.

Der primäre Laserstrahl 6 trifft auf die Eintrittsfläche 38, die den transmittierten Anteil des Laserstrahls 6 hindurch lässt und in einen kollimierten Laserstrahl **39** umformt. Der kollimierte Laserstrahl 39 trifft auf die erste Reflektionsfläche 15, die den reflektierten Anteil umlenkt und in einen zumindest abschnittsweise ringförmigen Laserstrahl **40** umformt. Der Laserstrahl 40 breitet sich in einer Ausbreitungsebene **41** aus und trifft auf die zweite Reflektionsfläche 36, die den reflektierten Anteil als zweifach reflektierten Laserstrahl **42** in Richtung der Austrittsfläche 11 umlenkt. Der Laserstrahl 42 breitet sich in einer Ausbreitungsebene **43** aus und trifft auf die Austrittsfläche 11, durch die der transmittierte Anteil als transmittierter Laserstrahl **44** hindurch tritt. Der Winkel α der ersten Reflektionsfläche 15 und der Winkel β der zweiten Reflektionsfläche 36 sind so aufeinander abgestimmt, dass der primäre Laserstrahl 6 durch das optische System 32 um 90° abgelenkt wird und die Ausbreitungsebene 43 des ringförmigen Laserstrahls 42 senkrecht zur Ausbreitungsrichtung 16 des primären Laserstrahls 6 verläuft. An der Austrittsfläche 11 erfolgt keine Ablenkung des Laserstrahls 42, der sich weiterhin in der Ausbreitungsebene 43 ausbreitet.

Das optische System 32 umfasst das als Reflektionsfläche 15 ausgebildete erste optische Element 25, das den ringförmigen Laserstrahl 40 erzeugt, und eine Strahlformungsoptik **45,** die den ringförmigen Laserstrahl 40, 42 zumindest abschnittsweise in einer Ebene parallel zur Ausbreitungsebene 41, 43 formt. Die Strahlformungsoptik 45 ist in die Mantelfläche 36 des zweiten Ausschnittes 33 integriert und in Form von diffraktiven optischen Elementen **46a, 46b** ausgebildet. Die diffraktiven optischen Elemente 46a, 46b sind so ausgebildet, dass die nullte Beugungsordnung des Laserstrahls auf einer Zielfläche einen Teil einer linienförmigen Lasermarkierung **47** erzeugt und die höheren Beugungsordnungen, vor allem die erste Beugungsordnung, punktförmige Lasermarkierungen **48a, 48b** erzeugen. Die punktförmigen Lasermarkierungen sind unter einem Winkel von 180° zueinander angeordnet und können dazu genutzt werden, einen Winkel von 180° von einer Zielfläche auf eine andere Zielfläche zu übertragen. Der Winkel zwischen den diffraktiven optischen Elementen kann beliebig gewählt werden, die häufigsten Winkel, die übertragen werden, sind 90° und 180°.

**Fign. 4A****, B** zeigen eine dritte Ausführungsform eines erfindungsgemäßen optischen Systems **52** bestehend aus einem ersten optischen Element **53,** das als Kegelspiegel ausgebildet ist, und einer Strahlformungsoptik **54.** Dabei zeigt Fig. 4A einen Schnitt durch das optische System 52 parallel zur Kegelachse und Fig. 4B einen Schnitt senkrecht zur Kegelachse des Kegelspiegels 53.

Der Kegelspiegel 53 ist kegelförmig mit einer Grundfläche **55,** die mit einem Optikträger **56** verbunden ist, und einer Mantelfläche **57** ausgebildet. Die Mantelfläche 57 ist für den Laserstrahl 6 als Reflektionsfläche ausgebildet. Der Optikträger 56 ist mit einem weiteren Trägerelement **58,** das in der Ausführung der Fig. 1 als hohler Glaszylinder ausgebildet ist, verbunden. Das Trägerelement 58 weist eine erste und zweite Grenzfläche **59, 60,** die als Transmissionsflächen für den Laserstrahl ausgebildet sind, auf. Die erste Grenzfläche 59 wird als Eintrittsfläche und die zweite Grenzfläche 60 als Austrittsfläche für den Laserstrahl bezeichnet.

Der aus der Strahlquelle 5 austretende primäre Laserstrahl 6 trifft auf die Mantelfläche 57, die den reflektierten Anteil des Laserstrahls umlenkt und in einen ringförmigen Laserstrahl **61** umformt, der sich in einer Ausbreitungsebene **62** ausbreitet. Der ringförmige Laserstrahl 61 trifft auf das Trägerelement 58. Der transmittierte Anteil des Laserstrahls 61 tritt durch die Eintrittsfläche 59 in das Trägerelement 58 ein und propagiert durch das Trägerelement 58 in Richtung der Austrittsfläche 60. An den Ein- und Austrittsflächen 59, 60 erfolgt keine Ablenkung des Laserstrahls 61, der sich weiterhin in der Ausbreitungsebene 62 ausbreitet.

Die Strahlformungsoptik 54 ist in Form eines ersten und zweiten diffraktiven optischen Elementes **63a, 63b** ausgebildet und in die Austrittsfläche 60 des Trägerelementes 58 integriert. Die diffraktiven optischen Elemente 63a, 63b sind so ausgebildet, dass die nullte Beugungsordnung des Laserstrahls auf einer Zielfläche einen Teil einer linienförmigen Lasermarkierung **64** erzeugt und die höheren Beugungsordnungen punktförmige Lasermarkierungen **65a, 65b** erzeugen.

Um auf einer Zielfläche eine um 360° geschlossene linienförmige Lasermarkierung zu erzeugen, eignen sich als Grundflächen für den Grundkörper alle begrenzten Flächen, bei denen die Richtungsableitung der Begrenzungslinie stetig ist. Ist die Richtungsableitung an einer Stelle nicht stetig, kommt es zu einer Unterbrechung des ringförmigen Laserstrahls, so dass die linienförmige Lasermarkierung auf einer Zielfläche nicht vollumfänglich geschlossen ist. Bei Anwendungen, bei denen eine geschlossene Lasermarkierung nicht erforderlich ist, können auch Grundflächen verwendet werden, deren Richtungsableitung der Begrenzungslinie an einer oder mehreren Stellen nicht stetig ist, wie beispielsweise bei einer mehreckigen Grundfläche, bei der die Richtungsableitung der Begrenzungslinie im Bereich der Seiten stetig und im Bereich der Eckpunkte nicht stetig ist.

**Fign. 5A****, B** zeigen eine vierte Ausführungsform eines erfindungsgemäßen optischen Systems **72,** das als Grundkörper in Form eines Pyramidenstumpfes **73** mit einem kegelstumpfförmigen Ausschnitt **74** ausgebildet ist. Dabei zeigt Schnitt Fig. 5A einen Schnitt durch das optische System 72 parallel zur Pyramidenachse und Fig. 5B einen Schnitt senkrecht zur Pyramidenachse des Grundkörpers 73. Eine Pyramide ist ein spezieller Kegel mit einer mehreckigen Grundfläche und es gelten die Definitionen eines Kegels.

Der Pyramidenstumpf 73 umfasst eine quadratische Grundfläche **75,** eine zur Grundfläche 75 parallele, quadratische Deckfläche **76** und eine an die Grund- und Deckflächen 75, 76 angrenzende Mantelfläche **77,** die unter einem Winkel γ zur Grundfläche 75 angeordnet ist. Die Grundfläche 75 und die Mantelfläche 76 sind für den Laserstrahl als Transmissionsflächen in Form einer Eintrittsfläche bzw. einer Austrittsfläche ausgebildet. Die Oberfläche des Ausschnittes 74 umfasst eine Grundfläche **78,** die in der Deckfläche 76 des Grundkörpers 73 angeordnet ist, eine Deckfläche **79,** die als Transmissionsfläche für den Laserstrahl ausgebildet ist, und eine an die Grund- und Deckflächen 78, 79 angrenzende Mantelfläche **80,** die als Reflektionsfläche für den Laserstrahl ausgebildet ist. Die Mantelfläche 80 bildet ein erstes optisches Element **81.**

Das optische System 72 weist in der Mantelfläche 77 eine Strahlformungsoptik **82** bestehend aus vier plan geschliffenen optischen Elementen **83a-83d** auf. Eine Austrittsfläche **84** für den Laserstrahl aus dem optischen System 72 umfasst die vier optischen Elemente 83a-83d sowie vier Seitenflächen **85a-85d** des Pyramidenstumpfes 73.

Der divergente primäre Laserstrahl 6 trifft auf die Eintrittsfläche 75, durch die der transmittierte Anteil als transmittierter Laserstrahl **86** hindurch tritt. Der transmittierte Laserstrahl 86 propagiert durch den Grundkörper 73 und trifft zu einem Teil auf die Deckfläche 79, die als Transmissionsfläche ausgebildet ist und den transmittierten Anteil als punktförmigen Lotstrahl **87** hindurch lässt, und zu einem anderen Teil auf die Reflektionsfläche 80, die den reflektierten Anteil umlenkt und in einen ringförmigen Laserstrahl **88** umformt. Der ringförmige Laserstrahl 88 breitet sich in einer Ausbreitungsebene **89** aus und trifft auf die Austrittsfläche 84 mit den vier optischen Elementen 83a-83d und den vier Seitenflächen 85a-85d.

Der ringförmige Laserstrahl 88 wird an der Austrittsfläche 84 in vier linienförmige Laserstrahlen **90a-90d** und vier punktförmige Laserstrahlen **91a-91d** unterteilt und entsprechend dem Einfallswinkel abgelenkt. Der Winkel α der Reflektionsfläche 80 und der Winkel γ der Mantelfläche 77 sind so aufeinander abgestimmt, dass der primäre Laserstrahl 6 durch das optische System 72 um 90° abgelenkt wird und eine Ausbreitungsebene 92 der linien- und punktförmigen Laserstrahlen senkrecht zur Ausbreitungsrichtung 16 des primären Laserstrahls 6 verläuft. Die Seitenflächen 85a-85d erzeugen auf einer Zielfläche jeweils die linienförmigen Laserstrahlen 90a-90d und die optischen Elemente 83a-83d erzeugen jeweils die punktförmigen Laserstrahlen 91 a-91 d.

Die punktförmigen Laserstrahlen 91a-91d können mittels einer Strahlformungsoptik kollimiert oder fokussiert werden. Diese Strahlformungsoptik kann durch eine gekrümmte Eintrittsfläche in die geschliffenen optischen Elemente 83a-83d integriert werden.

**Fign. 6A****, B** zeigen eine fünfte Ausführungsform eines erfindungsgemäßen optischen Systems **102** bestehend aus dem ersten optischen Element 53, das als Kegelspiegel ausgebildet ist, und einer Strahlformungsoptik **103.** Dabei zeigt Fig. 6A einen Schnitt durch das optische System parallel zur Kegelachse und Fig. 6B einen Schnitt senkrecht zur Kegelachse des Kegelspiegels 53.

Der Kegelspiegel 53 umfasst die Grundfläche 55, die mit dem Optikträger 56 verbunden ist, und die Mantelfläche 57, die zumindest abschnittsweise als Reflektionsfläche für den Laserstrahl 6 ausgebildet ist. Die Strahlformungsoptik 103 ist in die Mantelfläche 57 des Kegelspiegels 53 integriert und umfasst zwei diffraktive optische Elemente **104a, 104b** sowie zwei plan geschliffene optische Elemente **105a, 105b.** Die Mantelfläche 57 mit den optischen Elementen 104a, 104b, 105a, 105b bildet eine Reflektionsfläche **106** für den Laserstrahl.

Der primäre Laserstrahl 6 trifft auf die Reflektionsfläche 106, die den reflektierten Anteil des Laserstrahls 6 umlenkt und in ein Laserstrahlbündel **107** umformt, das sich in einer Ausbreitungsebene **108** ausbreitet. Das Laserstrahlbündel 107 besteht aus einem ersten und zweiten Ringstrahl **109a, 109b** und vier punktförmigen Laserstrahlen **110a, 110b, 111a, 111b.** Die diffraktiven optischen Elemente 104a, 104b erzeugen aus der nullten Beugungsordnung des Laserstrahls einen Teil der Ringstrahlen 109a, 109b und aus den höheren Beugungsordnungen die punktförmigen Laserstrahlen 110a, 110b. Die geschliffenen optischen Elemente 105a, 105b erzeugen die punktförmigen Laserstrahlen 111 a, 111 b. Die punktförmigen Laserstrahlen 111a, 111 b können mittels einer Strahlformungsoptik kollimiert oder fokussiert werden. Diese Strahlformungsoptik kann durch eine gekrümmte Eintrittsfläche in die geschliffenen optischen Elemente 105a, 105b integriert werden.

Das erste optische Element 53 und die Strahlformungsoptik 103 sind monolithisch ausgebildet und die optischen Elemente 104a, 104b, 105a, 105b sind in die Mantelfläche 57 des Kegelspiegels 53 integriert. Alternativ kann der Kegelspiegel aus mehreren Abschnitten, die unmittelbar aneinander grenzen, zusammengesetzt sein. Dabei werden die Abschnitte so gewählt, dass sie die gewünschten strahlformenden Eigenschaften aufweisen, d.h. ein erster Abschnitt ist beispielsweise in Form eines Kegelabschnittes ausgebildet und erzeugt einen zumindest abschnittsweise ringförmigen Laserstrahl und ein zweiter Abschnitt ist beispielsweise plan geschliffen und erzeugt einen punktförmigen Laserstrahl.

Fig. 7 zeigt ein erfindungsgemäßes Lasersystem **120** bestehend aus einer ersten Strahleinrichtung **121** mit einer ersten Strahlquelle **122** und einem ersten erfindungsgemäßen optischen System **123,** einer zweiten Strahleinrichtung **124** mit einer zweiten Strahlquelle **125** und einem zweiten erfindungsgemäßen optischen System **126** und einer dritten Strahleinrichtung **127** mit einer dritten Strahlquelle **128** und einem dritten erfindungsgemäßen optischen System **129.** Die erfindungsgemäßen optischen Systeme 123, 126, 129 entsprechen einem der optischen Systeme 2, 32, 52, 72, 102 und erzeugen in der Ausbreitungsebene jeweils einen ringförmigen Laserstrahl, der als Ringstrahl bezeichnet wird, und zwei punktförmige Laserstrahlen, die als Punktstrahlen bezeichnet werden.

Die erste Strahleinrichtung 121 erzeugt einen ersten Ringstrahl **130,** der in einer ersten vertikalen Ebene **131** angeordnet ist und als erster vertikaler Ringstrahl bezeichnet wird, und zwei vertikale Punktstrahlen **132a, 132b,** die ebenfalls in der ersten vertikalen Ebene 131 angeordnet sind. Die erste vertikale Ebene 131 verläuft senkrecht zu einer horizontalen Ebene **133.** Die Ausrichtung der horizontalen Ebene 133 ist über eine durch die Gravitationskraft bestimmte vertikale Richtung **134** definiert.

Die zweite Strahleinrichtung 124 erzeugt einen zweiten Ringstrahl **135,** der in einer zweiten vertikalen Ebene **136** angeordnet ist und als zweiter vertikaler Ringstrahl bezeichnet wird, und zwei vertikale Punktstrahlen **137a, 137b,** die ebenfalls in der zweiten vertikalen Ebene 136 angeordnet sind. Die zweite vertikale Ebene 136 ist senkrecht zur horizontalen Ebene 133 und senkrecht zur ersten vertikalen Ebene 131 ausgebildet.

Die dritte Strahleinrichtung 127 erzeugt einen dritten Ringstrahl **138,** der in der horizontalen Ebene 133 angeordnet ist und als horizontaler Ringstrahl bezeichnet wird, und zwei horizontale Punktstrahlen **139a, 139b,** die ebenfalls in der horizontalen Ebene 133 angeordnet sind. Der horizontale Ringstrahl 138 verläuft senkrecht zum ersten und zweiten vertikalen Ringstrahl 130, 135. Die dritte Strahleinrichtung 127 erzeugt neben dem Ringstrahl 138 und den Punktstrahlen 139a, 139b einen punktförmigen Lotstrahl **140,** der entgegengesetzt zur vertikalen Richtung 134 ausgerichtet ist und auf der Schnittlinie der beiden vertikalen Ringstrahlen 130, 135 liegt. Der Lotstrahl 140 kann alternativ auch von einer zusätzlichen Strahlquelle erzeugt werden.

Alternativ zum Lasersystem 120 mit drei Strahlquellen 122, 125, 128 kann das Lasersystem eine einzige Strahlquelle aufweisen. In diesem Fall wird der Laserstrahl über Strahlteiler in Teilstrahlen geteilt. Ein Lasersystem mit einer Strahlquelle ist vorteilhaft, wenn die Strahlquelle eine ausreichende Leistung zur Verfügung stellt, dass die Ringstrahlen auf dem Untergrund sichtbar sind. Ein Lasersystem mit einer einzigen Strahlquelle kann kompakter aufgebaut werden, als ein Lasersystem, in dem drei Strahlquellen angeordnet sind.

## Patentansprüche

1. Optisches System (2; 32; 52; 72; 102; 122, 125, 128) zur Strahlformung eines Laserstrahls (6) bestehend aus einem ersten optischen Element (25; 53; 81), das eine Mantelfläche (15; 57; 80), die als Reflektionsfläche für den Laserstrahl (6) ausgebildet ist, umfasst, wobei die Mantelfläche (15; 57; 80) den Laserstrahl (6) zumindest abschnittsweise in einen ringförmigen Laserstrahl (18; 40; 61; 88), der sich in einer Ausbreitungsebene (19; 41; 62; 89) ausbreitet, umformt,
**dadurch gekennzeichnet, dass**
ein weiteres optisches Element (26; 45; 54; 82; 103) zur Strahlformung des zumindest abschnittsweise ringförmigen Laserstrahls (18; 40; 61; 88) vorgesehen ist, wobei das weitere optische Element (26; 45; 54; 82; 103) den ringförmigen Laserstrahl (18; 40; 61; 88) zumindest abschnittsweise in einer Ebene parallel zur Ausbreitungsebene (19; 41; 62; 89) des Laserstrahls formt.

2. Optisches System nach Anspruch 1, **dadurch gekennzeichnet, dass** das weitere optische Element (103) zur Strahlformung des zumindest abschnittsweise ringförmigen Laserstrahls in die Mantelfläche (57) des ersten optischen Elementes (53) integriert ist oder unmittelbar an die Mantelfläche (57) angrenzt.

3. Optisches System nach Anspruch 1, **dadurch gekennzeichnet, dass** das erste optische Element einen ersten Mantelflächenabschnitt, der den zumindest abschnittsweise ringförmigen Laserstrahl erzeugt, und das weitere optische Element einen zweiten Mantelflächenabschnitt umfasst, wobei der zweite Mantelflächenabschnitt an den ersten Mantelflächenabschnitt angrenzt.

4. Optisches System nach Anspruch 1, **dadurch gekennzeichnet, dass** ein weiteres optisches Element (7; 58; 73) mit mindestens einer Grenzfläche (9; 11; 35, 36; 59, 60; 75, 85a-85d) vorgesehen ist, wobei das optische Element (26; 45; 54; 82) zur Strahlformung des zumindest abschnittsweise ringförmigen Laserstrahls (18; 40; 61; 88) in einer Ebene parallel zur Ausbreitungsebene (19; 41; 62; 89) in die mindestens eine Grenzfläche (11; 36; 60) integriert ist oder unmittelbar an die mindestens eine Grenzfläche (85a-85d) angrenzt.

5. Optisches System nach Anspruch 4, **dadurch gekennzeichnet, dass** ein weiteres optisches Element (37) zur Strahlformung des Laserstrahls in einer Ebene senkrecht zur Ausbreitungsebene (16) vorgesehen ist, wobei das weitere optische Element (37) in die mindestens eine Grenzfläche integriert ist oder unmittelbar an die mindestens eine Grenzfläche (35) angrenzt.

6. Optisches System nach einem der Ansprüche 1 bis 5, **dadurch gekennzeichnet, dass** das optische Element zur Strahlformung des zumindest abschnittsweise ringförmigen Laserstrahls (18; 40; 61; 88) in einer Ebene parallel zur Ausbreitungsebene (19; 41; 62; 89) und/oder das weitere optische Element zur Strahlformung des zumindest abschnittsweise ringförmigen Laserstrahls (18; 40; 61; 88) in einer Ebene senkrecht zur Ausbreitungsebene (19; 41; 62; 89) als diffraktive optische Elemente (27a-27d; 46a, 46b; 63a, 63b; 104a, 104b) ausgebildet sind und in die Mantelfläche (57) des ersten optischen Elementes (53) und/oder in die mindestens eine Grenzfläche (11; 36; 60) des weiteren optischen Elementes (7; 58; 73) integriert sind.

7. Optisches System nach einem der Ansprüche 1 bis 6, **dadurch gekennzeichnet, dass** das optische Element (82; 103) zur Strahlformung des ringförmigen Laserstrahls (88) in einer Ebene parallel zur Ausbreitungsebene (89) und/oder das weitere optische Element zur Strahlformung des ringförmigen Laserstrahls in einer Ebene senkrecht zur Ausbreitungsebene als geschliffene optische Elemente (83a-83d; 105a, 105b) ausgebildet sind.

8. Optisches System nach einem der Ansprüche 1 bis 7, **dadurch gekennzeichnet, dass** das erste optische Element als Grundkörper (7; 73) mit einer Grundfläche (9; 75), einer Deckfläche (10; 76) und einer an die Grund- und Deckfläche (9, 10; 75, 76) angrenzenden Mantelfläche (11; 77) ausgebildet ist, wobei die Grundfläche (9; 75) und die Mantelfläche (11; 77) zumindest abschnittsweise als Transmissionsflächen für den Laserstrahl ausgebildet sind und der Grundkörper (7; 73) einen ersten Ausschnitt (8; 74) mit einer Grundfläche (13; 78), die in der Deckfläche (10; 76) des Grundkörpers (7; 73) angeordnet ist, und der Mantelfläche (15; 80), die zumindest abschnittsweise als Reflektionsfläche für den Laserstrahl ausgebildet ist, umfasst.

9. Optisches System nach Anspruch 8, **dadurch gekennzeichnet, dass** der Grundkörper (7) einen zweiten Ausschnitt (33) bestehend aus einer Grundfläche (34), die in der Grundfläche (9) des Grundkörpers (7) angeordnet ist, einer Deckfläche (35), die zumindest abschnittsweise als Transmissionsfläche für den Laserstrahl ausgebildet ist, und einer an die Grund- und Deckflächen (34, 35) angrenzenden Mantelfläche (36), die zumindest abschnittsweise als Reflektionsfläche für den Laserstrahl ausgebildet ist, aufweist.

10. Optisches System nach einem der Ansprüche 8 bis 9, **dadurch gekennzeichnet, dass** der erste Ausschnitt (74) des Grundkörpers (73) eine zur Grundfläche (78) parallele Deckfläche (79), die zumindest abschnittsweise als Transmissionsfläche für den Laserstrahl ausgebildet ist, aufweist.

11. Lasersystem (1; 120) mit einer Strahlquelle (5; 122, 125, 128) zur Erzeugung eines Laserstrahls (6) und einem optischen System (2; 123, 126, 129) nach einem der Ansprüche 1 bis 10.

12. Lasersystem nach Anspruch 11, **dadurch gekennzeichnet, dass** eine Verstelleinrichtung (23, 24), mit der die Position der Strahlquelle (5) zum optischen System (2) und/oder die Position des optischen Systems (2) zur Strahlquelle (5) in einer Ausbreitungsrichtung (16) des Laserstrahls (6) und/oder in einer Ebene senkrecht zur Ausbreitungsrichtung (16) des Laserstrahls (6) verstellbar sind, vorgesehen ist.

13. Lasersystem nach einem der Ansprüche 11 bis 12, **dadurch gekennzeichnet, dass** ein erstes optisches System (123), das einen ersten zumindest abschnittsweise ringförmigen Laserstrahl (130) und mindestens einen punktförmigen Laserstrahl (132a, 132b) erzeugt, und mindestens ein weiteres optisches System (126, 129), das einen weiteren zumindest abschnittsweise ringförmigen Laserstrahl (135, 138) und mindestens einen punktförmigen Laserstrahl (137a, 137b, 139a, 139b) erzeugt, vorgesehen sind.
